# EUROPEAN PATENT SPECIFICATION

(11) **EP 3 431 731 B1**
(45) Date of publication and mention of the grant of the patent: **29.04.2020**
(21) Application number: 17181823.0
(22) Date of filing: 18.07.2017
(51) Int. Cl.: F01N 13/00, F02D 19/06, F02D 41/00, F02D 41/14

(54) **NOX SENSOR PROTECTION FOR AN INTERNAL COMBUSTION ENGINE**
NOX-SENSORSCHUTZ FÜR EINEN VERBRENNUNGSMOTOR
PROTECTION DE CAPTEUR DE NOX POUR UN MOTEUR À COMBUSTION INTERNE

(43) Date of publication of application: 23.01.2019
(73) Proprietor: Caterpillar Motoren GmbH & Co. KG, 24159 Kiel (DE)
(72) Inventor: Holst, Hauke, 24161 Altenholz (DE); Dreves, Jan, 24159 Kiel (DE); Tuexen, Thorsten, 24214 Gettorf (DE); Justin, Julian, Peoria, Illinois 61614 (US); Denis, Andrew Michael, Peoria, Illinois 61603 (US); Zuo, Jun, Edwards, Illinois 61528 (US); Hudgens, Jason, Washington, Illinois 61571 (US)
(74) Representative: BRP Renaud & Partner mbB Rechtsanwälte Patentanwälte Steuerberater

(56) References cited:
- EP-A1- 2 332 826
- WO-A1-2015/056452
- DE-A1-102008 001 257
- US-A1- 2005 262 833
- US-A1- 2014 208 724
- US-A1- 2015 160 102

## Description

### Technical Field

The present disclosure generally relates to internal combustion engines configured to be operated with two types of fuel, in particular, to the protection of a NOx sensor provided in an exhaust system of such an internal combustion engine.

### Background

Internal combustion engines exhaust a complex mixture of air pollutants. These air pollutants are composed of gaseous compounds such as nitrogen oxides (NOx), and solid particulate matter also known as soot. Due to increased environmental awareness, exhaust emission standards have become more stringent, and the amount of NOx and soot emitted to the atmosphere by an engine may be regulated depending on the type of engine, size of engine, and/or class of engine.

In order to ensure compliance with the regulation of NOx, a strategy called selective catalytic reduction (SCR) for treating the exhaust gas can be implemented. SCR is a process where a gaseous or liquid reductant, e.g. ammonia, urea or an urea solution, is injected into the exhaust gas stream of an engine. The reductant reacts with nitrogen oxides in the exhaust gas to form water and nitrogen. Usually, urea is introduced into the exhaust gases in an amount sufficient to provide the degree of NOx reduction desired. The desired amount of the reductant can be controlled by, e.g., an urea injection system, for example, based on a detection by a NOx sensor.

In marine vessels, specifically large ships such as ferries, cruise ships or cargo ships, it may be necessary to change over between operating one or more internal combustion engines of the ship with, for example, heavy fuel oil (HFO) and marine diesel oil (MDO) due to environmental regulations. For example, while the ship may run on HFO at sea, it may be necessary to switch to running on MDO near harbors or the like, in order to meet emission standards such as IMO III.

EP 2 332 826 A1 discloses an exhaust gas purifying system for a vessel engine.

US 2015/0160102 A1 discloses a system and a method for sampling of fluid.

The present disclosure is directed, at least in part, to improving or overcoming one or more aspects of prior systems.

### Summary

According to an aspect of the present disclosure, an internal combustion engine system comprises the features of one of claims 1, 6, and 10.

Other features and aspects of this disclosure will be apparent from the following description and the accompanying drawings.

### Brief Description of the Drawings

Fig. 1 shows a schematic overview of an internal combustion engine system in accordance with the present disclosure;
Fig. 2 shows an exemplary configuration of a flow control device for protecting a NOx sensor in an exhaust system of the internal combustion engine in accordance with the present disclosure;
Fig. 3 shows another exemplary embodiment of a flow control device for protecting a NOx sensor in an exhaust system of an internal combustion engine;
Fig. 4 shows a further embodiment of a flow control device for protecting a NOx sensor in an exhaust system of an internal combustion engine.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that, when an internal combustion engine including a SCR aftertreatment system is operated with heavy fuel oil, NOx sensors provided for the SCR system cannot be used because of poisoning by sulfur or other harmful exhaust gas contents. Thus, if the NOx sensors are not protected while the internal combustion engine is operated with HFO, the NOx sensors also can no longer be used when the engine is operated with MDO, because the sensors would have been damaged during HFO operation. In this respect, the present disclosure is based at least in part on the realization that the NOx sensors can be protected during HFO operation by providing a fluid shield, for example, pressurized shield gas or a liquid that does not damage the sensor, around the same such that the exhaust gas cannot reach the sensors during HFO operation.

Further, the present disclosure is based on part on the realization that it may be advantageous to provide a NOx sensor in bypass line that is branched off from an exhaust pipe of the internal combustion engine, and to prevent the exhaust gas in the exhaust pipe from reaching the NOx sensor by connecting the bypass line to an intake system of the internal combustion engine at a position downstream of a compressor of a turbocharger. In this manner, compressed intake air can be used to prevent the exhaust gas from entering the bypass line. In this respect, it has also been realized that it may be advantageous to connect the bypass line to the intake system at a position upstream of the compressor when the NOx sensor is used for measuring the NOx concentration in the exhaust gas. In this manner, exhaust gas from the exhaust pipe can be sucked into the bypass line and towards the NOx sensor.

Further, the present disclosure is based at least in part on the realization that, when a SCR system is provided, it may be advantageous to provide a pair of NOx sensors both upstream of a SCR assembly and downstream of the same. In this manner, the efficiency of the SCR assembly can be monitored.

Further, the present disclosure is based at least in part on the realization that the systems for protecting NOx sensors disclosed herein may also be used for engines without a SCR system, for example, dual fuel engines operable with both gaseous fuel and liquid fuel. Also in this case, when the dual fuel engine is operated with heavy fuel oil or other fuels that produce exhaust that may damage the sensor, the NOx sensor that is used to measure the NOx concentration can be protected using the methods disclosed herein.

The present disclosure is also based on the realization that a valve such as a solenoid valve can be used to control the supply of pressurized air to a NOx sensor assembly when an internal combustion engine is operated with HFO. In this manner, the supply of compressed air can be turned on and off by the solenoid valve depending on whether the NOx sensor is needed for emissions control or not. This allows protection of the NOx sensor from, for example, HFO and other high PPM sulfur fuels, while it is not necessary to bypass a SCR system.

Further, the present disclosure is based in part on the realization that a system of valves or gates that can be opened during diesel fuel operation and closed during heavy fuel oil operation also allows for an efficient protection of an associated NOx sensor. In this respect, it has been realized that it may be advantageous to provide the NOx sensor in a separate sensor duct that is arranged within an exhaust pipe or outside of the same, and to also provide an expansion duct connecting an outlet of the sensor duct to the exhaust pipe to return the exhaust from the sensor duct to the exhaust pipe in order to increase the flow through the sensor duct.

Finally, the present disclosure is based on the realization that a rotatable and/or slidable member can be mounted to a measurement duct provided in the exhaust pipe and moved by an actuator in order to selectively open and close an exhaust inlet of the measurement duct. In this manner, a simple design associated with low costs can be used. Further, the actuator can be easily and reliably controlled, for example, by an engine or aftertreatment control unit.

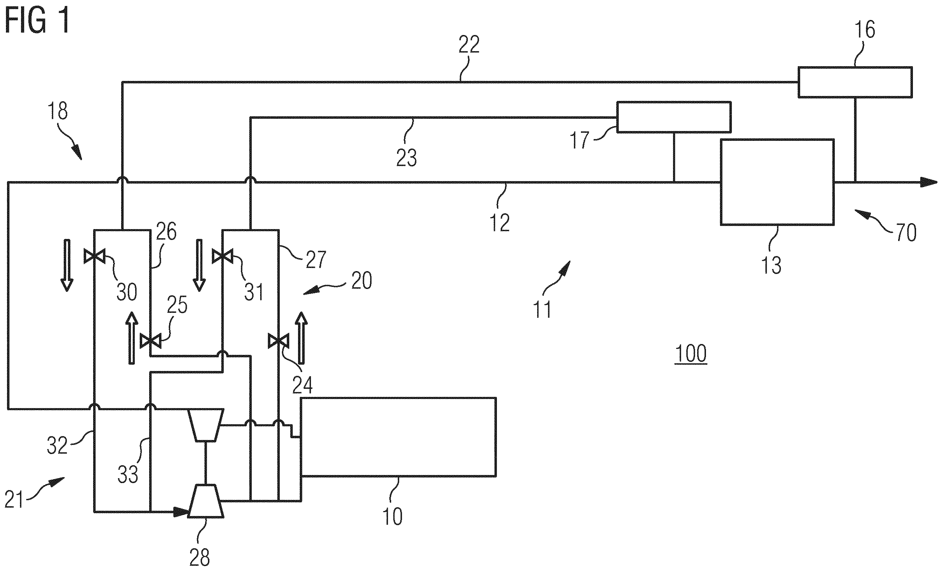

Exemplary embodiments of an internal combustion engine system having a NOx sensor protection in accordance with the present disclosure are described in the following with reference to Figs. 1 to 4.

An internal combustion engine system 100 shown in Fig. 1 includes an internal combustion engine 10 configured to be selectively operated with a first fuel such as marine diesel oil (MDO) and a second fuel producing exhaust gas having, for example, a high sulfur content such as heavy fuel oil (HFO). As used herein, the term "first fuel" generally refers to a first type of fuel, for example, MDO or gaseous fuel, and the term "second fuel" generally refers to a second type of fuel that is different from the first type, for example, HFO. Intake air is supplied to internal combustion engine 10 via an air intake system 21, and the mixture of intake air and liquid fuel is combusted in combustion chambers of internal combustion engine 10 to produce a mechanical output. Exhaust gas resulting from the combustion of the first fuel or the second fuel is discharged from the internal combustion engine 10 via an exhaust system 11.

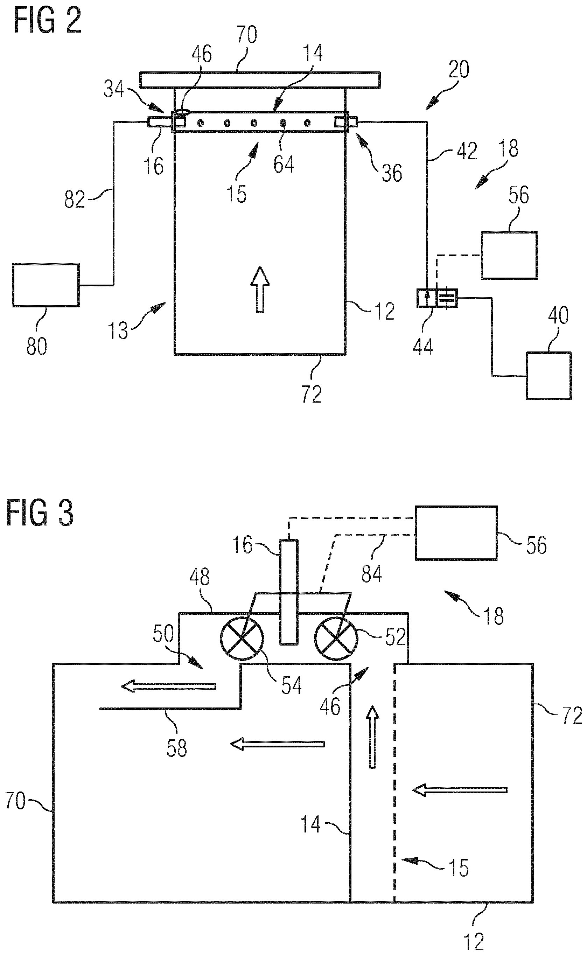

A turbocharger 28 is provided to compress intake air supplied to internal combustion engine 10 via air intake system 21. Further, a SCR aftertreatment module or system 13 is provided in an exhaust pipe 12 connected to internal combustion engine 10. The configuration of SCR system 13 is shown in more detail in Fig. 2, which will be discussed below.

A NOx sensor 16 is fluidly communicated with exhaust pipe 12 and configured to measure a NOx concentration in the exhaust flowing through exhaust pipe 12. A second NOx sensor 17 is disposed upstream of SCR system 13 and is also configured to measure the NOx concentration in the exhaust gas flowing through exhaust pipe 12. Each of NOx sensors 16 and 17 is connected to an evaluation unit 80 via a sensor line 82 (as shown, for example, in Fig. 2). Evaluation unit 80 is configured to evaluate the detection results from NOx sensor 16, 17 and may be connected to a control unit 56 (see Fig. 2) configured to control operation of SCR system 13 and/or internal combustion engine 10.

NOx sensor 16 is arranged in a bypass line 22 fluidly connecting exhaust pipe 12 to air intake system 21 of internal combustion engine 10. Likewise, NOx sensor 17 is arranged in a bypass line 23 fluidly connecting exhaust pipe 12 to air intake system 21 of internal combustion engine 10. Bypass line 22 is configured to be fluidly connected to air intake system 21 at a position downstream of a compressor of turbocharger 28 by a purge line 26, and is configured to be fluidly connected to air intake system 21 at a position upstream of the compressor of turbocharger 28 by a suction line 32. In a similar manner, bypass line 23 is configured to be fluidly connected to air intake system 21 at a position downstream of turbocharger 28 via a purge line 27, and at a position upstream of turbocharger 28 via a suction line 33. A pair of supply valves 24, 25 are arranged in purge lines 26, 27, respectively, and a pair of supply valves 30, 31 are arranged in suction lines 32, 33, respectively.

During operation of internal combustion engine 10 with MDO, SCR system 13 is controlled based on the measurement results from NOx sensors 16, 17. To this end, control unit 56 controls the pair of supply valves 24, 25 to be closed, and the pair of supply valves 30, 31 to be opened. Therefore, as shown by the downward arrows in Fig. 1, exhaust from exhaust pipe 12 is sucked into bypass lines 22, 23 and passes NOx sensors 16, 17. The portion of exhaust sucked into bypass line 22, 23 is then mixed with the intake air supplied to internal combustion engine 10 upstream of turbocharger 28. Based on the measurement results from NOx sensors 16, 17, operation of internal combustion engine 10 and SCR system 13 can be adequately controlled.

When internal combustion engine 10 is to be operated with heavy fuel oil, the high sulfur content in the exhaust gas flowing through exhaust pipe 12 would damage NOx sensors 16, 17. Therefore, when internal combustion engine 10 is operated with heavy fuel oil, control unit 56 controls the pair of supply valves 30, 31 to be closed, and the pair of supply valves 24, 25 to be opened. In this manner, compressed intake air from upstream of turbocharger 28 enters bypass lines 22, 23 and flows past NOx sensors 16, 17 into exhaust pipe 12. This is because the pressure of the compressed intake air is higher than the pressure of the exhaust gas in exhaust pipe 12. In this manner, it can be assured that no exhaust gas from exhaust pipe 12 can enter bypass lines 22, 23 and reach NOx sensors 16, 17.

With the above-described configuration, a flow control device 18 that is configured to selectively allow a flow of exhaust from exhaust pipe 12 to NOx sensors 16, 17 when internal combustion engine 10 is operated with MDO, and inhibit the flow of exhaust from exhaust pipe 12 to NOx sensors 16, 17 when internal combustion engine 10 is operated with HFO can be realized.

Although in the exemplary embodiment shown in Fig. 1 a pair of NOx sensors 16, 17 is provided, it will be appreciated that, in other embodiments, only a single NOx sensor 16 can be provided, for example, at an outlet 70 of SCR system 13. Further, although the internal combustion engine system 100 shown in Fig. 1 includes SCR system 13, it will be appreciated that the present disclosure can also be applied to internal combustion engine systems that do not include SCR system 13. For example, in dual fuel engines operable with gaseous fuel and liquid fuel, it can also be necessary to monitor the NOx concentration while the engine is operated with MDO and/or gaseous fuel, and to protect the NOx sensor when the engine is operated with HFO.

In the example shown in Fig. 1, NOx sensors 16, 17 are arranged in bypass lines 22, 23, and compressed intake air is supplied from air intake system 21 of internal combustion engine 10. In other embodiments, however, NOx sensors 16, 17 may be mounted to exhaust pipe 12 without providing bypass lines 22, 23. This will be described in more detail below for the exemplary NOx sensor 16 provided at outlet 70 of SCR system 13.

Fig. 2 shows a flow control device 18 for protecting a NOx sensor in accordance with an exemplary embodiment. As shown in Fig. 2, NOx sensor 16 is mounted near outlet 70 of SCR system 13. In particular, SCR system 13 may be configured as a pipe section of exhaust pipe 12 and include a SCR assembly for treating exhaust gas entering SCR system 13 via an inlet 72. The flow of exhaust in SCR system 13 is shown by the bold arrow in Fig. 2.

In the exemplary embodiment, NOx sensor 16 is mounted on one side of a measurement duct 14 extending across the section of exhaust pipe 12 forming SCR system 13. As shown in Fig. 2, measurement duct 14 is mounted in exhaust pipe 12 in such a manner that it extends substantially perpendicular to the flow of exhaust in exhaust pipe 12. In some embodiments, the length of measurement duct 14 may be substantially the same as the diameter of exhaust pipe 12.

Measurement duct 14 includes an exhaust inlet 15, which is configured as a plurality of inlet openings 64 distributed over the length of measurement duct 14 and arranged to face towards inlet 72 such that exhaust flowing in exhaust pipe 12 can enter measurement duct 14. On the one side of measurement duct 14, NOx sensor 16 is mounted via a sensor port 34 to project into measurement duct 14 in order to measure the NOx concentration of the exhaust that has entered measurement duct 14 via exhaust inlet 15. At a position adjacent to NOx sensor 16 inside measurement duct 14, an outlet 46 is formed to discharge the exhaust gas that has entered via exhaust inlet 15.

On the opposite side of measurement duct 14, a shield gas supply unit 20 is mounted to measurement duct 14 via a supply port 36. Shield gas supply unit 20 is configured to be selectively activated to supply a shield gas to the inside of measurement duct 14 when internal combustion engine 10 is operated with HFO. The configuration of shield gas supply unit 20 will be described in more detail below. As shown in Fig. 2, the opposing ends of measurement duct 14, which may be a substantially tube-like member, are closed by sensor port 34 and supply port 36, respectively.

NOx sensor 16 is connected to evaluation unit 80 via sensor line 82. Evaluation unit 80 is configured to evaluate the detection results from NOx sensor 16 and may be connected to control unit 56 by a communication line (not shown).

As shown in Fig. 2, shield gas supply unit 20 includes a shield gas supply 40 fluidly connected to sensor port 34 via a shield gas supply line 42. A shield gas supply valve 44 is disposed in shield gas supply line 42 and configured to be actuated by control unit 56 to open when internal combustion engine 10 is operated with HFO. In this manner, pressurized shield gas at a pressure that exceeds the pressure of the exhaust gas in exhaust pipe 12 is supplied to measurement duct 14. On the other hand, while internal combustion engine 10 is operated with MDO, shield gas supply valve 44 is actuated by control unit 56 to close, such that no shield gas is supplied to measurement duct 14, and NOx sensor 16 can perform the NOx measurements.

In the exemplary embodiment, shield gas supply 40 may be configured as a supply of compressed air. Of course, in other embodiments, a different shield gas or a liquid can be used. Further, it will be appreciated that, in the present embodiment, shield gas supply 40 may also be a supply of compressed intake air from air intake system 21, similar to what has been explained above with respect to Fig. 1. Further, it will be appreciated that, in other embodiments, evaluation unit 80 and control unit 56 may be embodied in an engine control unit of internal combustion engine 10, either as appropriate control software or hardware. Shield gas supply valve 44 may be configured as any appropriate valve that can be selectively actuated, for example, under control of control unit 56. For example, shield gas supply valve 44 may be a solenoid valve or another electrically actuated valve. Of course, in other embodiments, it is also contemplated that shield gas supply valve may be a mechanically actuated valve that may be actuated, for example, by means of an actuator (not shown), or may be manually actuated by an operator of internal combustion engine 10 when the operation of the same is switched from the MDO mode to the HFO mode. It will be appreciated that the above also applies to supply valves 24, 25 and 32, 33 in the embodiment shown in Fig. 1.

Although this is not shown in Fig. 2, it will be appreciated that measurement duct 14 may be configured such that the opening areas of the plurality of inlet openings 64 decrease towards the mounting position of NOx sensor 16 to obtain a homogeneous flow of exhaust gas towards the measuring position.

In the embodiment described with respect to Fig. 2, NOx sensor 16 is mounted at least in part within exhaust pipe 12, i.e., measurement duct 14. In other embodiments, however, NOx sensor 16 may be mounted in a separate sensor duct 48 (see Fig. 3) that can be fluidly separated from measurement duct 14. This will be described in more detail below with reference to Fig. 3.

As shown in Fig. 3, in another exemplary embodiment, measurement duct 14 is configured as a tube-like member that extends across exhaust pipe 12, similar to what has been described above with respect to Fig. 2. The difference to the embodiment shown in Fig. 2 is that measurement duct 14 is closed on one side (the lower side in Fig. 3), and has its outlet 46 opposite to the closed end of measurement duct 14. Sensor duct 48 has an inlet that is fluidly connected to outlet 46 of measurement duct 14, and NOx sensor 16 is provided at least in part in sensor duct 48. In the example shown in Fig. 3, sensor duct 48 is configured as a duct that is mounted on the outer side of exhaust pipe 12 and extends substantially along the same. It will he readily appreciated, however, that in other embodiments sensor duct 48 may also be disposed within exhaust pipe 12, with measurement duct 14 opening into the same via outlet 46 in an appropriate manner. Sensor duct 48 includes a sensor duct outlet 50 that is provided downstream of NOx sensor 16 and configured to return the portion of exhaust entering sensor duct 48 via outlet 46 of measurement duct 14 to exhaust pipe 12 at a position downstream of measurement duct 14.

In order to increase the flow of exhaust through sensor duct 48, an expansion duct 58 having a flow area that is greater than the flow area of sensor duct 48 is fluidly connected to sensor duct outlet 50. The exhaust exiting via expansion duct 58 is returned to the main exhaust flow in exhaust pipe 12.

In the present embodiment, flow control device 18 includes a pair of valves 52, 54 provided upstream and downstream of NOx sensor 16 in sensor duct 48, respectively. The pair of valves 52, 54 is configured to be actuated to block the passage of exhaust through sensor duct 48 when internal combustion engine 10 is to be operated with HFO. To this end, control unit 56 is connected to the pair of valves 52, 54 via a communication line 84 and configured to actuate the pair of valves 52, 54 to open or close depending on the operation mode of internal combustion engine 10. In particular, during operation with MDO, valves 52, 54 are opened to allow the portion of the exhaust entering measurement duct 14 to pass NOx sensor 16 such that NOx sensor 16 can measure the NOx concentration in the exhaust gas. When internal combustion engine 10 is to be operated with HFO, control unit 56 is configured to close the pair of valves 52, 54 prior to switching from MDO operation to HFO operation. In this manner, the section of sensor duct 48 in which NOx sensor 16 is mounted is fluidly separated from the exhaust flowing inside exhaust pipe 12, such that the high sulfur content or other harmful substances containing exhaust gas cannot reach NOx sensor 16. In this manner, NOx sensor 16 can be reliably protected by the pair of valves 52, 54. The pair of linked valves 52, 54 may again be configured as appropriate electrically actuated valves such as solenoid valves. In other embodiments, however, the pair of linked valves 52, 54 may also be configured as manually operated valves, for example, screw valves that are manually closed and opened by an operator when the operating mode of internal combustion engine 10 is changed. Preferably, the pair of valves 52, 54 are closed prior to switching the internal combustion engine 10 from operation with MDO to HFO in order to assure that no high sulfur content exhaust gas is trapped in the region surrounding NOx sensor 16.

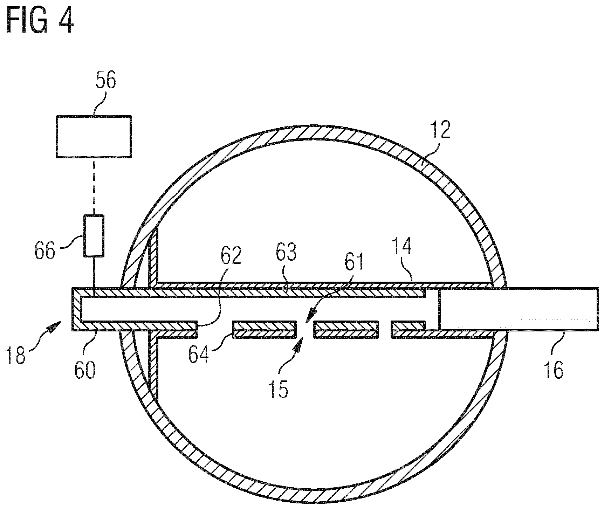

Fig. 4 shows a further embodiment of flow control device 18 for protecting NOx sensor 16 in accordance with the present disclosure. As shown in Fig. 4, measurement duct 14 is arranged in exhaust pipe 12 in a manner that is similar to the manner which has been described above with respect to Figs. 2 and 3. In particular, measurement duct 14 is configured substantially similar to measurement duct 14 shown in Fig. 2, except that the side of measurement duct 14 opposite to NOx sensor 16 is not closed by supply port 36. Instead, a shield pipe 60 is mounted to measurement duct 14 on the side opposite to NOx sensor 16.

As shown in Fig. 4, shield pipe 60 is configured as a tube-like member having an inlet 61 that corresponds to exhaust inlet 15 of measurement duct 14. In particular, in the present example, shield pipe 60 includes a plurality of openings 62 with a number and opening areas that correspond substantially to the number and opening areas of inlet openings 64 of measurement duct 14. In particular, as shown in Fig. 4, shield pipe 60 is configured such that the openings 62 of the same can be selectively aligned with inlet openings 64 to overlap the same. To this end, it may be preferable that an opening area of each opening 62 is at least slightly larger than an opening area of the associated inlet opening 64. This can assure that the exhaust can freely enter the inside of measurement duct 14 without being inadvertently blocked by the same.

In the example shown in Fig. 4, shield pipe 60 is configured to be inserted into measurement duct 14 and to be rotated between a first position, in which openings 62 are aligned with inlet openings 64 and exhaust can enter the inside of shield pipe 60 to flow along the same and exit shield pipe 60 on the side where NOx sensor 16 is mounted to measurement duct 14. In this manner, NOx sensor 16 can measure the NOx concentration in the exhaust gas. An actuator 66 is configured to rotate shield pipe 60 from the first position to a second position, in which the respective openings are not aligned and inlet openings 64 are closed by a wall portion 63 of shield pipe 60. In this manner, no exhaust can enter measurement duct 14, and NOx sensor 16 is fluidly separated from the flow of exhaust in exhaust pipe 12. Actuator 66 may be selectively controlled to open and close the passage to the inside of measurement duct 14 under control of control unit 56. In this manner, NOx sensor 16 can be easily protected from high sulfur content or other harmful substances containing exhaust gas when internal combustion engine 10 is operated with HFO, without having to provide, for example, a shield gas supply or an additional sensor duct as in the previously described embodiments.

It will be appreciated that, in other embodiments, shield pipe 60 may not be arranged inside of measurement duct 14, but covering the same from the outside. In other words, measurement duct 14 may be inserted into shield pipe 60 to achieve the same effects that have been described above. Further, while in the embodiment shown in Fig. 4 shield pipe 60 is configured to be rotated between the first position and the second position, it will be appreciated that in other embodiments shield pipe 60 may also be slid along the direction of extension of measurement duct 14 to selectively open and close inlet openings 64, or may be moved between the two positions by rotating and sliding the same.

### Industrial Applicability

Herein, the term "internal combustion engine" may refer to internal combustion engines which may be used as main or auxiliary engines of stationary power providing systems such as power plants for production of heat and/or electricity as well as in ships/vessels such as cruiser liners, cargo ships, container ships, and tankers. Fuels for internal combustion engines may include diesel oil, marine diesel oil, heavy fuel oil, alternative fuels or a mixture thereof, and natural gas.

Examples of internal combustion engines for the herein disclosed systems include medium speed internal combustion diesel engines, for example, engines of the series M20, M25, M32, M34DF, M43, M46DF manufactured by Caterpillar Motoren GmbH & Co. KG, Kiel, Germany, operated in a range of 500 to 1000 rpm.

Although the preferred embodiments of this invention have been described herein, improvements and modifications may be incorporated without departing from the scope of the following claims.

## Claims

1. An internal combustion engine system (100) comprising:
an internal combustion engine (10) configured to be selectively operated with a first fuel and a second fuel:
an exhaust pipe (12) configured to receive exhaust resulting from the combustion of the first fuel or the second fuel in the internal combustion engine (10);
a NOx sensor (16, 17) configured to be fluidly communicated with the exhaust pipe (12) and to measure a NOx concentration in the exhaust flowing in the exhaust pipe (12);
a flow control device (18) configured to selectively allow a flow of exhaust from the exhaust pipe (12) to the NOx sensor (16, 17) when the internal combustion engine (10) is operated with the first fuel, and inhibit the flow of exhaust from the exhaust pipe (12) to the NOx sensor (16, 17) when the internal combustion engine (10) is operated with the second fuel;
a measurement duct (14) disposed at least in part in the exhaust pipe (12) and including an exhaust inlet (15) configured to receive a portion of the exhaust flowing in the exhaust pipe (12), wherein the NOx sensor (16, 17) is configured to be fluidly communicated with the exhaust inlet (15);
a shield gas supply (40) and a shield gas supply line (42) fluidly connecting the shield gas supply (40) to the measurement duct (14); and
a shield gas supply valve (44) disposed in the shield gas supply line (42) and configured to be actuated when the internal combustion engine (10) is operated with the second fuel.

2. The system according to claim 1, wherein
the flow control device (18) includes a shield gas supply unit (20) configured to be selectively activated to supply a shield gas or liquid to at least a region around the NOx sensor (16, 17) when the internal combustion engine (10) is operated with the second fuel.

3. The system according to claim 2, further comprising
a bypass line (22, 23) fluidly connecting the exhaust pipe (12) to an air intake system (21) of the internal combustion engine (10), the NOx sensor (16, 17) being arranged in the bypass line (22, 23), and
a first supply valve (24, 25) configured to be selectively actuated to supply intake air from the air intake system (21) to the bypass line (22, 23) as the shield gas when the internal combustion engine (10) is operated with the second fuel.

4. The system according to claim 3, wherein the first supply valve (24, 25) is disposed in a purge line (26, 27) connected to the air intake system (21) at a position downstream of a turbocharger (28), the system further comprising a second supply valve (30, 31) disposed in a suction line (32, 33) connected to the air intake system (21) at a position upstream of the turbocharger (28) and configured to be selectively actuated to suck exhaust from the exhaust pipe (12) into the bypass line (22, 23) when the internal combustion engine (10) is operated with the first fuel.

5. The system according to claim 1, wherein
the measurement duct (14) extends across the exhaust pipe (12) in a direction substantially perpendicular to the flow of exhaust in the exhaust pipe (12), and
the NOx sensor (16, 17) is fluidly connected to the measurement duct (14) via a sensor port (34) at a first side.

6. An internal combustion engine system (100) comprising:
an internal combustion engine (10) configured to be selectively operated with a first fuel and a second fuel:
an exhaust pipe (12) configured to receive exhaust resulting from the combustion of the first fuel or the second fuel in the internal combustion engine (10);
a NOx sensor (16, 17) configured to be fluidly communicated with the exhaust pipe (12) and to measure a NOx concentration in the exhaust flowing in the exhaust pipe (12);
a flow control device (18) configured to selectively allow a flow of exhaust from the exhaust pipe (12) to the NOx sensor (16, 17) when the internal combustion engine (10) is operated with the first fuel, and inhibit the flow of exhaust from the exhaust pipe (12) to the NOx sensor (16, 17) when the internal combustion engine (10) is operated with the second fuel;
a measurement duct (14) disposed at least in part in the exhaust pipe (12) and including an exhaust inlet (15) configured to receive a portion of the exhaust flowing in the exhaust pipe (12), wherein the NOx sensor (16, 17) is configured to be fluidly communicated with the exhaust inlet (15);
a sensor duct (48) fluidly connected to an outlet (46) of the measurement duct (14), the NOx sensor (16, 17) provided at least in part in the sensor duct (48); and
a sensor duct outlet (50) provided downstream of the NOx sensor (16, 17) and configured to return the portion of the exhaust entering the sensor duct (48) via the measurement duct (14) to the exhaust pipe (12) at a position downstream of the measurement duct (14),
wherein the flow control device (18) includes a pair of valves (52, 54) provided upstream and downstream of the NOx sensor (16, 17) in the sensor duct (48), respectively, and configured to be actuated to block the passage of exhaust through the sensor duct (48) when the internal combustion engine (10) is to be operated with the second fuel.

7. The system according to claim 6, wherein the pair of valves (52, 54) includes a first valve (52) and a second valve (54) linked to each other and configured to be simultaneously actuated by a control unit (56).

8. The system according to claim 7, wherein the control unit (56) is configured to actuate the first and second valves (52, 54) to block the passage of exhaust through the sensor duct (48) prior to switching the internal combustion engine (10) from operation with the first fuel to operation with the second fuel.

9. The system according to claim 6 or 7, further comprising an expansion duct (58) fluidly connected to the sensor duct outlet (50) for increasing a flow of exhaust through the sensor duct (48).

10. An internal combustion engine system (100) comprising:
an internal combustion engine (10) configured to be selectively operated with a first fuel and a second fuel:
an exhaust pipe (12) configured to receive exhaust resulting from the combustion of the first fuel or the second fuel in the internal combustion engine (10);
a NOx sensor (16, 17) configured to be fluidly communicated with the exhaust pipe (12) and to measure a NOx concentration in the exhaust flowing in the exhaust pipe (12);
a flow control device (18) configured to selectively allow a flow of exhaust from the exhaust pipe (12) to the NOx sensor (16, 17) when the internal combustion engine (10) is operated with the first fuel, and inhibit the flow of exhaust from the exhaust pipe (12) to the NOx sensor (16, 17) when the internal combustion engine (10) is operated with the second fuel; and
a measurement duct (14) disposed at least in part in the exhaust pipe (12) and including an exhaust inlet (15) configured to receive a portion of the exhaust flowing in the exhaust pipe (12), wherein the NOx sensor (16, 17) is configured to be fluidly communicated with the exhaust inlet (15),
wherein the flow control device (18) includes a shield pipe (60) mounted to the measurement duct (14), the shield pipe (60) being configured to be moved between a first position in which the exhaust inlet (15) is opened, and a second position in which the exhaust inlet (15) is closed by the shield pipe (60), and
wherein the shield pipe (60) is rotatably and/or slideably mounted to the measurement duct (14) and configured to be rotated and/or slid between the first position and the second position by at least one actuator (66).

11. The system according to any one of claims 1 to 10, wherein the exhaust pipe (12) includes a SCR system (13), the NOx sensor (16, 17) being arranged at an outlet (70) of the SCR system (13).

## Patentansprüche

1. Verbrennungsmotorsystem (100), umfassend:
einen Verbrennungsmotor (10), der konfiguriert ist, um selektiv mit einem ersten Kraftstoff und einem zweiten Kraftstoff betrieben zu werden:
ein Abgasrohr (12), das konfiguriert ist, um Abgas aufzunehmen, das aus der Verbrennung des ersten Kraftstoffs oder des zweiten Kraftstoffs im Verbrennungsmotor (10) entsteht;
einen NOx-Sensor (16, 17), der konfiguriert ist, um fluidisch mit dem Abgasrohr (12) in Verbindung zu stehen und eine NOx-Konzentration in dem im Abgasrohr (12) strömenden Abgas zu messen;
eine Durchflusssteuervorrichtung (18), die konfiguriert ist, um selektiv einen Abgasstrom aus dem Abgasrohr (12) zum NOx-Sensor (16, 17) zuzulassen, wenn der Verbrennungsmotor (10) mit dem ersten Kraftstoff betrieben wird, und den Abgasstrom aus dem Abgasrohr (12) zum NOx-Sensor (16, 17) zu unterbinden, wenn der Verbrennungsmotor (10) mit dem zweiten Kraftstoff betrieben wird;
einen Messkanal (14), der zumindest teilweise im Abgasrohr (12) angeordnet und einen Abgaseinlass (15) einschließt, der konfiguriert ist, um einen Teil des durch das Abgasrohr (12) strömenden Abgases aufzunehmen, wobei der NOx-Sensor (16, 17) konfiguriert ist, um fluidisch mit dem Abgaseinlass (15) in Verbindung zu stehen;
eine Abschirmgasversorgung (40) und eine Abschirmgaszuleitung (42), die die Abschirmgasversorgung (40) fluidisch mit dem Messkanal (14) verbindet; und
ein Abschirmgaszufuhrventil (44), das in der Abschirmgaszufuhrleitung (42) angeordnet und konfiguriert ist, um betätigt zu werden, wenn der Verbrennungsmotor (10) mit dem zweiten Kraftstoff betrieben wird.

2. System nach Anspruch 1, wobei
die Durchflusssteuervorrichtung (18) eine Abschirmgaszufuhreinheit (20) einschließt, die konfiguriert ist, um selektiv aktiviert zu werden, um zumindest einem Bereich um den NOx-Sensor (16, 17) ein Abschirmgas oder eine Abschirmflüssigkeit zuzuführen, wenn der Verbrennungsmotor (10) mit dem zweiten Kraftstoff betrieben wird.

3. System nach Anspruch 2, ferner umfassend
eine Umgehungsleitung (22, 23), die das Abgasrohr (12) fluidisch mit einem Luftansaugsystem (21) des Verbrennungsmotors (10) verbindet, wobei der NOx-Sensor (16, 17) in der Umgehungsleitung (22, 23) angeordnet ist, und
ein erstes Zufuhrventil (24, 25), das konfiguriert ist, um selektiv betätigt zu werden, um Einlassluft aus dem Lufteinlasssystem (21) der Umgehungsleitung (22, 23) als Abschirmgas zuzuführen, wenn der Verbrennungsmotor (10) mit dem zweiten Kraftstoff betrieben wird.

4. System nach Anspruch 3, wobei das erste Zufuhrventil (24, 25) in einer Spülleitung (26, 27) angeordnet ist, die mit dem Luftansaugsystem (21) an einer Position in Strömungsrichtung nach einem Turbolader (28) angeordnet ist, wobei das System ferner ein zweites Zufuhrventil (30, 31) umfasst, das in einer Saugleitung (32, 33) angeordnet ist, die mit dem Luftansaugsystem (21) an einer Position in Strömungsrichtung vor dem Turbolader (28) verbunden und konfiguriert ist, um selektiv betätigt zu werden, um Abgas aus dem Abgasrohr (12) in die Umgehungsleitung (22, 23) anzusaugen, wenn der Verbrennungsmotor (10) mit dem ersten Kraftstoff betrieben wird.

5. System nach Anspruch 1, wobei
der Messkanal (14) sich über das Abgasrohr (12) in einer Richtung im Wesentlichen senkrecht zum Abgasstrom im Abgasrohr (12) erstreckt, und
der NOx-Sensor (16, 17) über einen Sensoranschluss (14) an einer ersten Seite mit dem Messkanal (34) fluidisch verbunden ist.

6. Verbrennungsmotorsystem (100), umfassend:
einen Verbrennungsmotor (10), der konfiguriert ist, um selektiv mit einem ersten Kraftstoff und einem zweiten Kraftstoff betrieben zu werden:
ein Abgasrohr (12), das konfiguriert ist, um Abgas aufzunehmen, das aus der Verbrennung des ersten Kraftstoffs oder des zweiten Kraftstoffs im Verbrennungsmotor (10) entsteht;
einen NOx-Sensor (16, 17), der konfiguriert ist, um fluidisch mit dem Abgasrohr (12) in Verbindung zu stehen und eine NOx-Konzentration in dem im Abgasrohr (12) strömenden Abgas zu messen;
eine Durchflusssteuervorrichtung (18), die konfiguriert ist, um selektiv einen Abgasstrom aus dem Abgasrohr (12) zum NOx-Sensor (16, 17) zuzulassen, wenn der Verbrennungsmotor (10) mit dem ersten Kraftstoff betrieben wird, und den Abgasstrom aus dem Abgasrohr (12) zum NOx-Sensor (16, 17) zu unterbinden, wenn der Verbrennungsmotor (10) mit dem zweiten Kraftstoff betrieben wird;
einen Messkanal (14), der zumindest teilweise im Abgasrohr (12) angeordnet und einen Abgaseinlass (15) einschließt, der konfiguriert ist, um einen Teil des durch das Abgasrohr (12) strömenden Abgases aufzunehmen, wobei der NOx-Sensor (16, 17) konfiguriert ist, um fluidisch mit dem Abgaseinlass (15) in Verbindung zu stehen;
einen Sensorkanal (48) in fluidischer Verbindung mit einem Auslass (46) des Messkanals (14), wobei der NOx-Sensor (16, 17) zumindest teilweise im Sensorkanal (48) bereitgestellt ist; und
einen Sensorkanalauslass (50), der in Strömungsrichtung nach dem NOx-Sensor (16, 17) bereitgestellt und konfiguriert ist, um den Teil des Abgases, das über den Messkanal (14) in den Sensorkanal (48) eintritt, an einer Position in Strömungsrichtung nach dem Messkanal (14) in das Abgasrohr (12) zurückzuführen,
wobei die Durchflusssteuervorrichtung (18) ein Paar von Ventilen (52, 54) einschließt, die in Strömungsrichtung vor bzw. nach dem NOx-Sensor (16, 17) im Sensorkanal (48) bereitgestellt und konfiguriert sind, betätigt zu werden, um den Durchgang von Abgas durch den Sensorkanal (48) zu blockieren, wenn der Verbrennungsmotor (10) mit dem zweiten Kraftstoff betrieben wird.

7. System nach Anspruch 6, wobei das Paar von Ventilen (52, 54) ein erstes Ventil (52) und ein zweites Ventil (54) einschließt, die miteinander verbunden und konfiguriert sind, um durch eine Steuereinheit (56) gleichzeitig betätigt zu werden.

8. System nach Anspruch 7, wobei die Steuereinheit (56) konfiguriert ist, um das erste und das zweite Ventil (52, 54) zu betätigen, um den Durchgang von Abgas durch den Sensorkanal (48) vor dem Umschalten des Verbrennungsmotors (10) vom Betrieb mit dem ersten Kraftstoff auf den Betrieb mit zweiten Kraftstoff zu blockieren.

9. System nach Anspruch 6 oder 7, ferner umfassend einen Expansionskanal (58), der fluidisch mit dem Sensorkanalauslass (50) verbunden ist, um einen Abgasstrom durch den Sensorkanal (48) zu erhöhen.

10. Verbrennungsmotorsystem (100), umfassend:
einen Verbrennungsmotor (10), der konfiguriert ist, um selektiv mit einem ersten Kraftstoff und einem zweiten Kraftstoff betrieben zu werden:
ein Abgasrohr (12), das konfiguriert ist, um Abgas aufzunehmen, das aus der Verbrennung des ersten Kraftstoffs oder des zweiten Kraftstoffs im Verbrennungsmotor (10) entsteht;
einen NOx-Sensor (16, 17), der konfiguriert ist, um fluidisch mit dem Abgasrohr (12) in Verbindung zu stehen und eine NOx-Konzentration in dem im Abgasrohr (12) strömenden Abgas zu messen;
eine Durchflusssteuervorrichtung (18), die konfiguriert ist, um selektiv einen Abgasstrom aus dem Abgasrohr (12) zum NOx-Sensor (16, 17) zuzulassen, wenn der Verbrennungsmotor (10) mit dem ersten Kraftstoff betrieben wird, und den Abgasstrom aus dem Abgasrohr (12) zum NOx-Sensor (16, 17) zu unterbinden, wenn der Verbrennungsmotor (10) mit dem zweiten Kraftstoff betrieben wird; und
einen Messkanal (14), der zumindest teilweise im Abgasrohr (12) angeordnet und einen Abgaseinlass (15) einschließt, der konfiguriert ist, um einen Teil des durch das Abgasrohr (12) strömenden Abgases aufzunehmen, wobei der NOx-Sensor (16, 17) konfiguriert ist, um fluidisch mit dem Abgaseinlass (15) in Verbindung zu stehen,
wobei die Durchflusssteuervorrichtung (18) ein am Messkanal (14) angebrachtes Abschirmrohr (60) einschließt, wobei das Abschirmrohr (60) konfiguriert ist, um zwischen einer ersten Position, in der der Abgaseinlass (15) geöffnet ist, und einer zweiten Position, in der der Abgaseinlass (15) durch das Abschirmrohr (60) geschlossen ist, bewegt zu werden, und
wobei das Abschirmrohr (60) drehbar und/oder verschiebbar am Messkanal (14) angebracht und konfiguriert ist, um zwischen der ersten Position und der zweiten Position durch mindestens einen Stellantrieb (66) gedreht und/oder verschoben zu werden.

11. System nach einem der Ansprüche 1 bis 10, **dadurch gekennzeichnet, dass** das Abgasrohr (12) ein SCR-System (13) einschließt, wobei der NOx-Sensor (16, 17) an einem Auslass (70) des SCR-Systems (13) angeordnet ist.

## Revendications

1. Système de moteur à combustion interne (100) comprenant :
un moteur à combustion interne (10) configuré pour fonctionner de manière sélective avec un premier carburant et un deuxième carburant :
un tuyau d'échappement (12) configuré pour recevoir un échappement résultant de la combustion du premier carburant ou du deuxième carburant dans le moteur à combustion interne (10) ;
un capteur de NOx (16, 17) configuré pour être en communication fluidique avec le tuyau d'échappement (12) et pour mesurer une concentration de NOx dans l'échappement s'écoulant dans le tuyau d'échappement (12) ;
un dispositif de commande d'écoulement (18) configuré pour permettre de manière sélective un écoulement d'échappement du tuyau d'échappement (12) au capteur de NOx (16, 17) lorsque le moteur à combustion interne (10) fonctionne avec le premier carburant, et empêcher un écoulement d'échappement du tuyau d'échappement (12) au capteur de NOx (16, 17) lorsque le moteur à combustion interne (10) fonctionne avec le deuxième carburant ;
un conduit de mesure (14) disposé au moins en partie dans le tuyau d'échappement (12) et incluant une entrée d'échappement (15) configurée pour recevoir une partie de l'échappement s'écoulant dans le tuyau d'échappement (12), dans lequel le capteur de NOx (16, 17) est configuré pour être en communication fluidique avec l'entrée d'échappement (15) ;
une alimentation en gaz de protection (40) et une conduite d'alimentation en gaz de protection (42) reliant de manière fluidique l'alimentation en gaz de protection (40) au conduit de mesure (14) ; et
une soupape d'alimentation en gaz de protection (44) disposée dans la conduite d'alimentation en gaz de protection (42) et configurée pour être actionnée lorsque le moteur à combustion interne (10) fonctionne avec le deuxième carburant.

2. Système selon la revendication 1, dans lequel
le dispositif de commande d'écoulement (18) inclut une unité d'alimentation en gaz de protection (20) configurée pour être activée de manière sélective pour alimenter un gaz ou liquide de protection à au moins une région autour du capteur de NOx (16, 17) lorsque le moteur à combustion interne (10) fonctionne avec le deuxième carburant.

3. Système selon la revendication 2, comprenant en outre
une conduite de dérivation (22, 23) reliant de manière fluidique le tuyau d'échappement (12) à un système d'admission d'air (21) du moteur à combustion interne (10), le capteur de NOx (16, 17) étant agencé dans la conduite de dérivation (22, 23), et
une première soupape d'alimentation (24, 25) configurée pour être actionnée de manière sélective pour alimenter de l'air d'admission du système d'admission d'air (21) à la conduite de dérivation (22, 23) comme le gaz de protection lorsque le moteur à combustion interne (10) fonctionne avec le deuxième carburant.

4. Système selon la revendication 3, dans lequel la première soupape d'alimentation (24, 25) est disposée dans une conduite de purge (26, 27) reliée au système d'admission d'air (21) au niveau d'une position en aval d'un turbocompresseur (28), le système comprenant en outre une deuxième soupape d'alimentation (30, 31) disposée dans une conduite d'aspiration (32, 33) reliée au système d'admission d'air (21) au niveau d'une position en amont du turbocompresseur (28) et configurée pour être actionnée de manière sélective pour aspirer l'échappement du tuyau d'échappement (12) dans la conduite de dérivation (22, 23) lorsque le moteur à combustion interne (10) fonctionne avec le premier carburant.

5. Système selon la revendication 1, dans lequel
le conduit de mesure (14) s'étend à travers le tuyau d'échappement (12) dans une direction sensiblement perpendiculaire à l'écoulement d'échappement dans le tuyau d'échappement (12), et
le capteur de NOx (16, 17) est relié de manière fluidique au conduit de mesure (14) par l'intermédiaire d'un orifice de capteur (34) au niveau d'un premier côté.

6. Système de moteur à combustion interne (100) comprenant :
un moteur à combustion interne (10) configuré pour fonctionner de manière sélective avec un premier carburant et un deuxième carburant :
un tuyau d'échappement (12) configuré pour recevoir un échappement résultant de la combustion du premier carburant ou du deuxième carburant dans le moteur à combustion interne (10) ;
un capteur de NOx (16, 17) configuré pour être en communication fluidique avec le tuyau d'échappement (12) et pour mesurer une concentration de NOx dans l'échappement s'écoulant dans le tuyau d'échappement (12) ;
un dispositif de commande d'écoulement (18) configuré pour permettre de manière sélective un écoulement d'échappement du tuyau d'échappement (12) au capteur de NOx (16, 17) lorsque le moteur à combustion interne (10) fonctionne avec le premier carburant, et empêcher un écoulement d'échappement du tuyau d'échappement (12) au capteur de NOx (16, 17) lorsque le moteur à combustion interne (10) fonctionne avec le deuxième carburant ;
un conduit de mesure (14) disposé au moins en partie dans le tuyau d'échappement (12) et incluant une entrée d'échappement (15) configurée pour recevoir une partie de l'échappement s'écoulant dans le tuyau d'échappement (12), dans lequel le capteur de NOx (16, 17) est configuré pour être en communication fluidique avec l'entrée d'échappement (15) ;
un conduit de capteur (48) relié de manière fluidique à une sortie (46) du conduit de mesure (14), le capteur de NOx (16, 17) fourni au moins en partie dans le conduit de capteur (48) ; et
une sortie de conduit de capteur (50) fournie en aval du capteur de NOx (16, 17) et configurée pour renvoyer la partie de l'échappement entrant dans le conduit de capteur (48) par l'intermédiaire du conduit de mesure (14) au tuyau d'échappement (12) au niveau d'une position en aval du conduit de mesure (14),
dans lequel le dispositif de commande d'écoulement (18) inclut une paire de soupapes (52, 54) fournies en amont et en aval du capteur de NOx (16, 17) dans le conduit de capteur (48), respectivement, et configurées pour être actionnées pour bloquer le passage d'échappement à travers le conduit de capteur (48) lorsque le moteur à combustion interne (10) doit fonctionner avec le deuxième carburant.

7. Système selon la revendication 6, dans lequel la paire de soupapes (52, 54) inclut une première soupape (52) et une deuxième soupape (54) reliées l'une à l'autre et configurées pour être actionnées simultanément par une unité de commande (56).

8. Système selon la revendication 7, dans lequel l'unité de commande (56) est configurée pour actionner les première et deuxième soupapes (52, 54) pour bloquer le passage d'échappement à travers le conduit de capteur (48) avant la commutation du moteur à combustion interne (10) d'un fonctionnement avec le premier carburant à un fonctionnement avec le deuxième carburant.

9. Système selon la revendication 6 ou 7, comprenant en outre un conduit d'expansion (58) relié de manière fluidique à la sortie de conduit de capteur (50) pour augmenter un écoulement d'échappement à travers le conduit de capteur (48).

10. Système de moteur à combustion interne (100) comprenant :
un moteur à combustion interne (10) configuré pour fonctionner de manière sélective avec un premier carburant et un deuxième carburant :
un tuyau d'échappement (12) configuré pour recevoir un échappement résultant de la combustion du premier carburant ou du deuxième carburant dans le moteur à combustion interne (10) ;
un capteur de NOx (16, 17) configuré pour être en communication fluidique avec le tuyau d'échappement (12) et pour mesurer une concentration de NOx dans l'échappement s'écoulant dans le tuyau d'échappement (12) ;
un dispositif de commande d'écoulement (18) configuré pour permettre de manière sélective un écoulement d'échappement du tuyau d'échappement (12) au capteur de NOx (16, 17) lorsque le moteur à combustion interne (10) fonctionne avec le premier carburant, et empêcher un écoulement d'échappement du tuyau d'échappement (12) au capteur de NOx (16, 17) lorsque le moteur à combustion interne (10) fonctionne avec le deuxième carburant ; et
un conduit de mesure (14) disposé au moins en partie dans le tuyau d'échappement (12) et incluant une entrée d'échappement (15) configurée pour recevoir une partie de l'échappement s'écoulant dans le tuyau d'échappement (12), dans lequel le capteur de NOx (16, 17) est configuré pour être en communication fluidique avec l'entrée d'échappement (15),
dans lequel le dispositif de commande d'écoulement (18) inclut un tuyau de protection (60) monté sur le conduit de mesure (14), le tuyau de protection (60) étant configuré pour être déplacé entre une première position dans laquelle l'entrée d'échappement (15) est ouverte, et une deuxième position dans laquelle l'entrée d'échappement (15) est fermée par le tuyau de protection (60), et
dans lequel le tuyau de protection (60) est monté de manière rotative et/ou coulissante sur le conduit de mesure (14) et configuré pour être tourné et/ou glissé entre la première position et la deuxième position par au moins un actionneur (66).

11. Système selon l'une quelconque des revendications 1 à 10, dans lequel le tuyau d'échappement (12) inclut un système SCR (13), le capteur de NOx (16, 17) étant agencé au niveau d'une sortie (70) du système SCR (13).
